# EUROPÄISCHE PATENTSCHRIFT

(11) **EP 0 406 611 B1**
(45) Veröffentlichungstag und Bekanntmachung des Hinweises auf die Patenterteilung: **15.09.1993**
(21) Anmeldenummer: 90111498.3
(22) Anmeldetag: 19.06.1990
(51) Int. Cl.: B64C 1/00

(54) **Vorrichtung für tragende Strukturen von Luft- und Raumfahrzeugen**
Device for bearing structures of aircrafts and spacecrafts
Dispositif pour structures supportantes d'aéronefs et d'astronefs

(30) Priorität: 05.07.1989 DE 3922025
(43) Veröffentlichungstag der Anmeldung: 09.01.1991
(73) Patentinhaber: Deutsche Aerospace Airbus Gesellschaft mit beschränkter Haftung, 21129 Hamburg (DE)
(72) Erfinder: Finkbeiner, Robert, D-2833 Harpstedt (DE); Filitz, Wolfhard, D-6382 Friedrichsdorf (DE); Knothe, Harald, D-6233 Kelkheim (DE)

(56) Entgegenhaltungen:
- DE-A- 2 756 726
- DE-A- 3 011 109
- DE-B- 2 508 976
- DE-C- 3 715 328

## Beschreibung

Die Erfindung betrifft eine Vorrichtung für tragende Strukturen von Luft- und Raumfahrzeugen zur Vermeidung von Beschädigungen infolge explosiver Dekompression, bestehend aus einem Dekompressionspanel, das mittels eines einen Anlageflansch aufweisenden Rahmens aus einer Halteeinrichtung in einer einzelne Räume trennenden Zwischenwand des Fahrzeugs montiert ist, wobei das Panel bei Erreichen von vorbestimmten Auslösedruckverhältnissen zwischen seiner Innen- und Außenseite aus der Zwischenwand drückbar ist.

Bei Luft- und Raumfahrzeugen können explosive Dekompressionen auftreten, wenn diese in Höhen mit deutlich niedrigerem Luftdruck als in Bodennähe fliegen. Da es innerhalb von Luft- und Raumfahrzeugen nötig ist, Luftdruckverhältnisse wie in Bodennähe zu schaffen, entsteht im Rumpf gegenüber der Umgebung ein Überdruck. Innerhalb derartiger Fahrzeuge ist es zudem erforderlich, ein Druckausgleichssystem für Räume zu schaffen, die durch Zwischenwände getrennt sind, wie beispielsweise zwischen Passagier- und Frachtraum. Ohne ein Druckausgleichssystem würde bei einer explosiven Dekompression die Gefahr einer Zerstörung der Zwischenwand und der darin üblicherweise verlegten Steuersysteme sowie tragender Strukturen des Luft- und Raumfahrzeuges drohen.

Eine Vorrichtung dieser Art ist bereits in der DE-PS 37 15 328 offenbart. Bei dieser bekannten Vorrichtung ist ein Dekompressionpanel in einen Rahmen eingesetzt, der auf einer Seite einen Anlageflansch sowohl für das Dekompressionspanel als auch für die Zwischenwand aufweist. An der anderen Seite des Rahmens sind mehrere, das Dekompressionspanel und die Zwischenwand übergreifende spezielle Sollbruchstellen aufweisende Haltefedern angebracht. Als nachteilig ist hierbei anzusehen, daß eine Änderung der Auslösedruckverhältnisse nur über eine entsprechende und mit hohem Fertigungsaufwand erreichbare Gestaltung der Haltefedern möglich ist. Es ist weiterhin zu berücksichtigen, daß sich die Montage derartiger Haltefedern außerordentlich aufwendig und umständlich gestaltet und beim Bruch einer Haltefeder ein vollständiger Austausch derselben erforderlich ist. Überdies vermag das vorbekannte Dekompressionspanel nicht mit ausreichender Sicherheit Beschädigungen an tragenden Strukturen zu vermeiden, da aufgrund des Funktionsprinzips eine gewünschte Freigabe großer Strömungsquerschnitte in kürzester Zeit zur Minderung der Verzögerung einer explosiven Dekompression nicht in befriedigen Maße erreicht werden kann.

Der Erfindung liegt die Aufgabe zugrunde, eine zuverlässige Vorrichtung der gattungsgemäßen Art zu schaffen, die mit geringem Fertigungsaufwand eine Montage ermöglicht.

Erfindungsgemäß wird diese Aufgabe durch die im Patentanspruch 1 gekennzeichneten Merkmale gelöst.

Bevorzugte Merkmale, die die Erfindung vorteilhaft weiterbilden, sind den nachgeordneten Patentansprüchen zu entnehmen.

Aufgrund der erfindungsgemäßen Ausgestaltung der Vorrichtung ist jede Halteeinrichtung als Auslöseverschluß ausgebildet, der mit einer Grundplatte auf dem Rahmen an der dem Flansch gegenüberliegenden Seite befestigt ist und der jeweils über wenigstens einen Verschlußhebel an die Zwischenwand und an das Panel angreift, wobei jeder Verschlußhebel schwenkbar an der Grundplatte befestigt ist und in seiner Haltestellung durch eine Schersicherung gesichert ist. Ein derartiger Auslöseverschluß läßt sich außerordentlich einfach herstellen und montieren und bietet auch in vorteilhafter weise die Möglichkeit, bestimmte Auslösedruckverhältnisse zwischen der Innen- und der Außenseite des Panels durch entsprechende Dimensionierung und/oder Werkstoffwahl der Schersicherung und/oder durch Änderung der Verschlußhebellänge einzustellen. Günstig ist zudem, daß bei Betätigung des Auslöseverschlusses stets nur ein definierter Bruch der Schersicherung statt ein Bruch eines Verschlußhebels vorgesehen ist. Hierdurch entfällt bei der Dimensionierung der Verschlußhebel das Vorsehen einer Sollbruchstelle.

Gemäß einer bevorzugten Ausgestaltung der Erfindung sind alle Verschlußhebel an derselben Drehachse schwenkbar. Hierdurch wird eine besonders einfache und teilearme Gestaltung des Auslöseverschlusses geschaffen.

Die Gestaltung der Verschlußhebel ist gemäß einer bevorzugten Ausbildungsalternative gleichartig, wobei die Verschlußhebel auf der Drehachse abwechselnd für den seitlichen Angriff an die Zwischenwand und an das Panel gelagert sind und vorzugsweise jeder Verschlußhebel an der Drehachse über einen Scherstift in seiner Anlagestellung gesichert ist.

Bei dieser Ausgestaltung der Verschlußhebel wird die Montage insbesondere dann erleichtert, wenn die Verschlußhebel oberhalb ihres Drehachsenlagerbereiches Spannmontagenocken aufweisen, die vorteilhaft lediglich mit einem Spannwerkzeug beaufschlagt werden, um die Scherstifte in der Anlagestellung der Verschlußhebel einzusetzen.

Gemäß einer alternativen bevorzugten Ausgestaltung weist der Verschluß wenigstens einen Verschlußhebel auf, der im Lagerbereich von einem anderen gabelförmig ausgebildeten Lagerhebel umgeben ist, wobei vorzugsweise alle Verschlußhebel an dem Grundteil in ihrer Anlagestellung durch einen gemeinsamen Scherstift gesichert sind. Günstig ist es für die Montage bei dieser Ausgestaltung des Verschlusses ferner, wenn die Verschlußhebel oberhalb ihres Drehachsenlagerbereiches eine Druckmontagefläche aufweisen, die zur Montage lediglich durch eine geeignete Pressvorrichtung beaufschlagt werden muß.

Vorzugsweise ist zur Montageerleichterung und einfachen Gestaltung des Auslöseverschlusses die Drehachse an dem Grundteil durch wenigstens einen Scherstift drehgesichert.

In der Zeichnung sind Ausführungsbeispiele der Erfindung schematisch dargestellt.
- Fig. 1: eine Darstellung einer Zwischenwand eines Luft-/ Raumfahrzeugs mit zwei eingebauten Vorrichtungen;
- Fig. 2: eine perspektivische Ansicht einer ersten Ausbildungsform eines Auslöseverschlusses mit gleichartigen Verschlußhebeln;
- Fig. 3: eine Vorderansicht auf einen gegenüber Fig. 2 modifizierten Auslöseverschluß, bei dem die Verschlußhebel oberhalb ihres Drehachsenlagerbereiches angeformte Spannmontagenocken aufweisen;
- Fig. 4: eine perspektivische Ansicht einer weiteren Ausbildungsform eines Auslöseverschlusses mit ungleichartigen Verschlußhebeln;
- Fig. 5: eine Vorderansicht der in Figur 2 und 4 dargestellten Varianten des Auslöseverschlusses, wobei eine Beaufschlagung der Druckmontageflächen der Verschlußhebel durch eine Pressvorrichtung zu Montagezwecken angedeutet ist;
- Fig. 6: eine Schnittansicht durch eine Vorrichtung zur Erläuterung der Verhältnisse der druckbeaufschlagten Flächen im Bereich des Dekompressionspanels;
- Fig. 7: eine Darstellung der Wirkungsweise der Vorrichtung bei schlagartig auftretendem höheren Innendruck;
- Fig. 8: eine Darstellung der Wirkungsweise der Vorrichtung gemäß Fig. 6 bei schlagartig auftretendem höheren Außendruck.

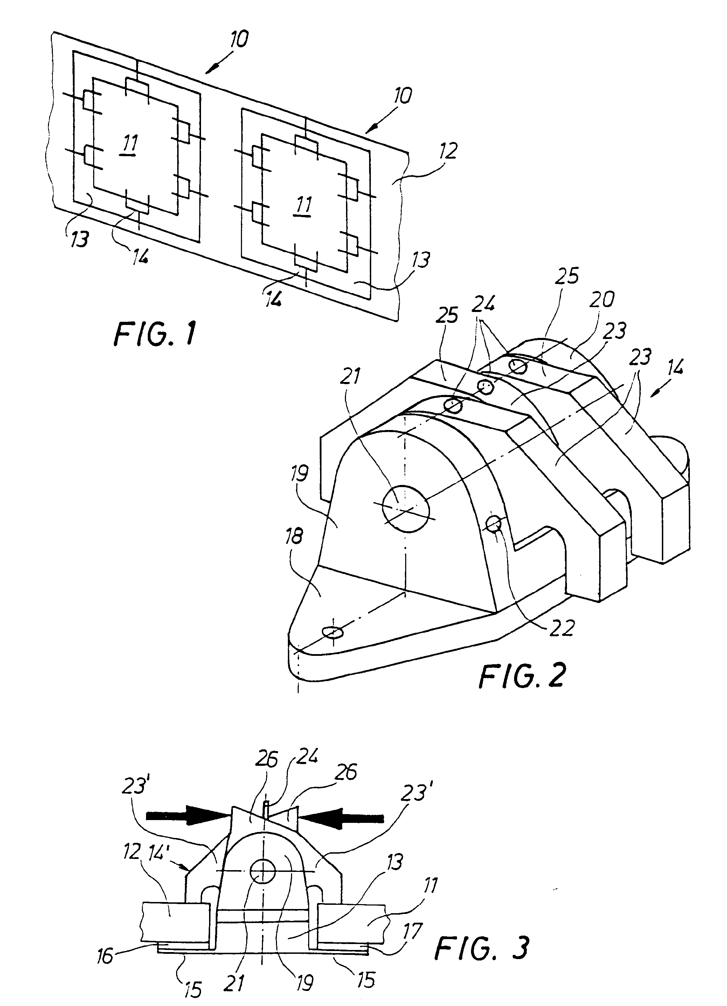

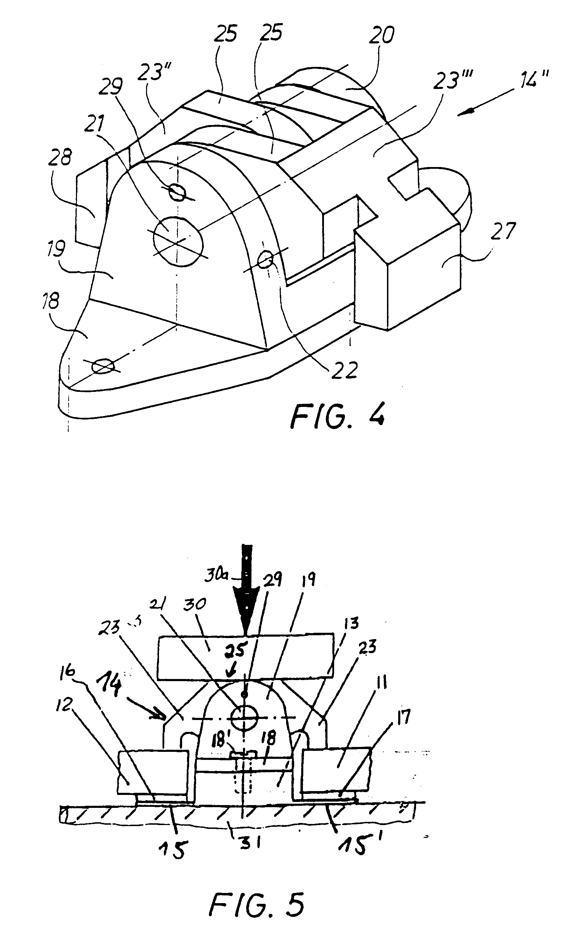

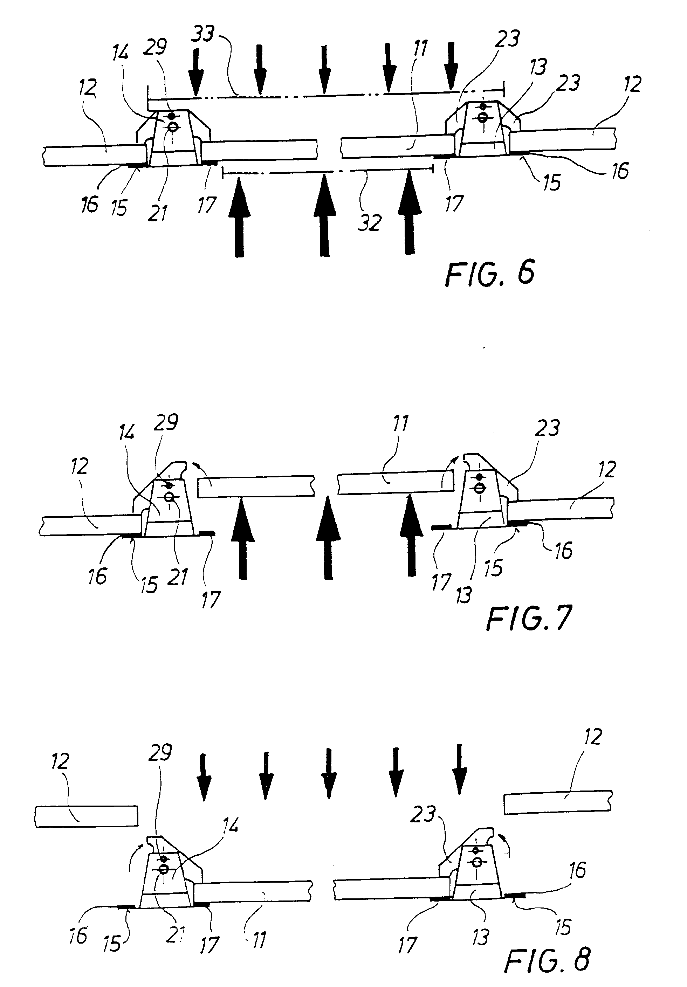

In Figur 1 sind schematisch zwei Vorrichtungen 10 zur Vermeidung von Beschädigungen tragender Strukturen von Luft- oder Raumfahrzeugen infolge explosiver Dekompression dargestellt. Jede Vorrichtung 10 besteht aus einem Dekompressionspanel 11, das in einer Zwischenwand 12 eines Luft- und/oder Raumfahrzeuges mittels eines Rahmens 13 und mehrerer Verschlüsse 14 montiert ist. Die Auslöseverschlüsse 14 sind gleichmäßig über den Umfang des Dekompressionspanels 11 angeordnet und auf dem Rahmen 13 befestigt. Sie stützen sich mit drehbar gelagerten Verschlußhebeln außen an der Zwischenwand 12 und nach innen an dem Panel 11 ab, wobei, wie aus Figur 6 zu entnehmen ist, der Rahmen 13 an der den Auslöseverschlüssen 14 gegenüberliegenden Seite einen umlaufenden Anlageflansch 15 besitzt. An der Rahmenaußenseite liegt der Flansch 15 über eine Dichtung 16 an der Zwischenwand 12 an, während der Flansch 15 an der Rahmeninnenseite über eine Dichtung 17 an dem Panel anliegt. Die dargestellten Verhältnisse sind auch aus den Figuren 3 und 5 zu ersehen.

Gemäß Fig. 2 ist eine erste Ausbildungsform des Auslöseverschlusses 14 gezeigt, der aus einer Grundplatte 18 besteht, auf der senkrechte Lagerflansche 19 und 20 befestigt sind. Zwischen den Lagerflanschen 19 und 20 erstreckt sich eine Drehachse 21, die an den Lagerflanschen 19 und 20 jeweils durch Scherstifte 22 dreh- und verschiebungsfest gelagert ist. Auf der Drehachse 21 sind drei Verschlußhebel 23 gelagert, die jeweils eine identische Form ähnlich einem Kipphebel besitzen. Die Verschlußhebel 23 sind auf der Drehachse 21 so gelagert, daß sie sich abwechselnd nach rechts und nach links erstrecken, um an die Zwischenwand 12 und das Panel 11 anzugreifen. Gesichert sind die Verschlußhebel 23 jeweils durch einen Scherstift 24 an der Drehachse 21. Im fertig montierten Zustand ist die Anordnung derart ausgebildet, daß sich jeder Scherstift durch eine passende Bohrung des Verschlußhebels 23 und die Drehachse in der Anlagestellung des Verschlußhebels 23 erstreckt. Dabei wird die Länge des Scherstiftes 24 so bemessen, daß entweder einer oder zwei Scherstellen zwischen Verschlußhebel 23 und Drehachse 21 vorliegen, wodurch in günstiger Weise die Abscherbedingungen verändert werden können.

Gemäß Fig. 3 kann die Montage des Auslöseverschlusses 14' besonders dadurch vereinfacht werden, daß im Bereich der Flächen 25 an den Verschlußhebeln 23' Spannmontagenocken 26 angeformt sind. In Figur 3 ist durch beiderseits der Spannmontagenocken dargestellte Pfeile die Betätigungsrichtung eines nicht dargestellten Spannwerkzeuges angedeutet, wobei die Scherstifte 24 in der letzten Phase vor dem vollständigen Einsetzen gezeigt sind.

Bei der in Fig. 4 dargestellten alternativen Ausbildungsform des Auslöseverschlusses 14'' ist ein Verschlußhebel 23'' dargestellt, der von einem gabelförmig ausgebildeten Verschlußhebel 23'' im Lagerbereich auf der Drehachse 21 umgeben ist. Die Verschlußhebel 23'' und 23''' weisen vergrößerte Andruckköpfe 27 und 28 auf. Gesichert sind die Verschlußhebel 23'' und 23''' an den Flanschen 19 und 20 der Grundplatte 18 über einen Scherstift 29, der sich in der Montagestellung durch eine Bohrung parallel zur Drehachse 21 erstreckt.

Eine vereinfachte Montagemöglichkeit für die in Fig. 4 dargestellte Ausbildungsform des Auslöseverschlusses 14'' zeigt Fig. 5. Hier sind die Druckmontageflächen 25 durch eine flache schematisch dargestellte Druckvorrichtung 30 beaufschlagt, die die gesamte Vorrichtung gegen einen Gegenhalter 31 drückt. In dieser Montagestellung kann der Scherstift 29 problemlos zur Sicherung der Anlagestellung der Verschlußhebel 23'' und 23''' eingeführt werden.

Der Scherstift 29 kann jedoch vor der Montage bereits eingesetzt werden und die Verschlußhebel 23'' und 23''' in Anlagestellung halten. In diesem Fall wird der Auslöseverschluß 14'' durch Nieten oder Schrauben auf dem Rahmen befestigt. Die Druckvorrichtung 30 und der Gegenhalter 31 wirken in diesem Fall direkt auf den Rahmen 13 mit seinem Flansch 15 ein und pressen durch die zusätzliche und gleichzeitige Anlage am Dekompressionspanel 11 und der Zwischenwand 12 die Dichtungen 16 und 17 soweit zusammen, daß während des Befestigungsvorganges der Grunsplatte 18 die Verschlußhebel 23'' und 23''' entlastet sind.

Figur 6 zeigt einen Ausschnitt einer Vorrichtung, wobei an der Unterseite strichpunktiert eine Angriffsfläche 32 für den mit dicken Pfeilen dargestellten Innendruck und oberhalb eine vergleichsweise größere strichpunktierte Angriffsfläche 33 für den mit kleineren Pfeilen dargestellten Außendruck gezeigt ist. Durch den Unterschied der Angriffsflächen 32 und 33 ergibt sich ein Kräfteverhältnis, welches Einfluß auf die erforderliche Zahl der Auslöseverschlüsse pro Panel, die Wahl der Werkstoffe und des Durchmessers, der Anzahl der Scherstellen bei den Scherstiften sowie auf die Dimensionierung der Verschlußhebellängen hat.

Bei schlagartig höherem Innendruck (Blow-out) wird die Angriffsfläche 32 beaufschlagt, die der Oberfläche des Panels 11 abzüglich der umlaufenden Dichtfläche (Flansch 15 und Dichtung 17) entspricht, vergleiche Figur 7. Dabei bewegt sich das Panel 11 gegen den Verschlußhebel 23 und verschwenkt diesen um die Drehachse 21 nach Abscherung des Scherstiftes 29 nach oben. Das Panel 11 wird dann von dem Verschlußhebel 23 freigegeben und gibt einen außerordentlich großen Strömungsquerschnitt frei, der die Auswirkungen der explosiven Blow-out - Dekompressionen deutlich mindert.

Wenn, wie in Figur 8 dargestellt, ein explosionsartiger Außendruck (Blow-in) auftritt, so wirkt dieser auf die insgesamt größere Angriffsfläche 33, die sich aus der Fläche des Panels 11 und der Fläche des Rahmens 13 ergibt. Nunmehr verschwenken die an der Zwischenwand 12 anliegenden Verschlußhebel 23 um die Achse 21, scheren den Scherstift 29 ab und geben eine Fläche zum Druckausgleich frei, die der Fläche des Rahmens 13 und des Dekompressionspanels entspricht.

## Patentansprüche

1. Vorrichtung für tragende Strukturen von Luft- und Raumfahrzeugen zur Vermeidung von Beschädigungen infolge explosiver Dekompression, bestehend aus einem Dekompressionspanel (11), das mittels eines einen Anlageflansch (15) aufweisenden Rahmens (13) aus einer Halteeinrichtung (14) in einer einzelne Räume trennenden Zwischenwand (12) des Fahrzeugs montiert ist, wobei das Panel (11) bei Erreichen von vorbestimmten Auslösedruckverhältnissen zwischen seiner Innen- und Außenseite aus der Zwischenwand (12) drückbar ist, dadurch gekennzeichnet, daß jede Halteeinrichtung als Auslöseverschluß (14,14',14'') ausgebildet ist, der mit einer Grundplatte (18) auf dem aus der Zwischenwand (12) lösbaren Rahmen (13) angeordnet ist, wobei der Rahmen (13) über Flansche (15) an der Zwischenwand (12) und am Panel (11) anliegt und an der gegenüberliegenden Seite der Flansche (15) über wenigstens einem Verschlußhebel (23, 23', 23'', 23''') des Auslöseverschlusses (14, 14', 14'') als Gegenlager gehalten ist, und jeder Verschlußhebel (23,23',23'',23''') schwenkbar an der Grundplatte (18) befestigt sowie in seiner Haltestellung durch eine Schersicherung (24,29) gesichert ist.

2. Vorrichtung nach Anspruch 1, dadurch gekennzeichnet, daß die Verschlußhebel (23,23',23'',23''') an der selben Drehachse (21) schwenkbar sind.

3. Vorrichtung nach Anspruch 1 oder 2, dadurch gekennzeichnet, daß gleichartige Verschlußhebel (23,23') vorgesehen sind, die auf der Drehachse (21) abwechselnd für den seitlichen Angriff an die Zwischenwand (12) und an das Panel (11) gelagert sind.

4. Vorrichtung nach Anspruch 3, dadurch gekennzeichnet, daß jeder Verschlußhebel (23,23') an der Drehachse (21) über einen Scherstift (24) in seiner Anlagestellung gesichert ist.

5. Vorrichtung nach einem der Ansprüche der vorangehenden Ansprüche, dadurch gekennzeichnet, daß die Verschlußhebel (23,23',23'',23''') oberhalb ihres Drehachsenlagerbereichs eine Druckmontagefläche (25) aufweisen.

6. Vorrichtung nach Anspruch 1 oder 2, dadurch gekennzeichnet, daß der Verschluß (14'') wenigstens einen Verschlußhebel (23 '') aufweist, der im Drehachsenlagerbereich von einem anderen gabelförmig ausgebildeten Verschlußhebel (23''') umgeben ist.

7. Vorrichtung nach Anspruch 6, dadurch gekennzeichnet, daß alle Verschlußhebel (23'',23''') an dem Grundteil (18) in ihrer Anlagestellung durch einen Scherstift (29) gesichert sind.

8. Vorrichtung nach Anspruch 3 oder 4, dadurch gekennzeichnet, daß die Verschlußhebel (23') oberhalb ihres Drehachsenlagerbereiches einen Spannmontagenocken (26) aufweisen.

9. Vorrichtung nach einem der Ansprüche 2 bis 8, dadurch gekennzeichnet, daß die Drehachse (21) an dem Grundteil (18) durch wenigstens einen Scherstift (22) lagegesichert ist.

## Claims

1. Device for load-bearing structures of aircraft and spacecraft for preventing damage due to explosive decompression, consisting of a decompression panel (11), which, by means of a frame (13) having a contact flange (15), is mounted by a holding device (14) in a partition (12) which separates individual compartments of the craft, in which the panel (11) can be pushed out of the partition (12) when certain release pressure relationships between its inside and outside are reached, characterised in that each holding device is formed as a release lock (14, 14', 14''), which is arranged with a base plate (18) on the frame (13), which can be released from the partition (12), the frame (13) bearing by means of flanges (15) against the partition (12) and the panel (11) and being held at the opposite side of the flanges (15) by means of at least one locking lever (23, 23', 23'', 23''') of the release lock (14, 14', 14'') as an abutment, and each locking lever (23, 23', 23'', 23''') being pivotably attached to the base plate (18) and secured in its holding position by a shear protective device (24, 19).

2. Device according to claim 1, characterised in that the locking levers (23, 23', 23'', 23''') are pivotable at the same pivot (21).

3. Device according to claim 1 or 2, characterised in that locking levers (23, 23') of the same type are provided, which levers are mounted on the pivot (21) so as to act alternately on the partition (12) and on the panel (11) from the side.

4. Device according to claim 3, characterised in that when installed each locking lever (23, 23') is secured to the pivot (21) by a shear pin (24).

5. Device according to any one of the preceding claims, characterised in that the locking levers (23, 23', 23'', 23''') comprise a pressure mounting face (25) above their pivot bearing area.

6. Device according to claim 1 or 2, characterised in that the lock (14'') comprises at least one locking lever (23'') which is surrounded in the pivot bearing area by another, forked locking lever (23''').

7. Device according to claim 6, characterised in that when installed all the locking levers (23'', 23''') are secured to the base part (18) by a shear pin (29).

8. Device according to claim 3 or 4, characterised in that the locking levers (23') comprise a clamping assembly cam (26) above their pivot bearing area.

9. Device according to any one of claims 2 to 8, characterised in that the pivot (21) is secured in a fixed position to the base part (18) by at least one shear pin (22).

## Revendications

1. Dispositif pour les structures portantes de véhicules aériens et spatiaux servant à éviter des dommages à la suite d'une décompression explosive, consistant en un panneau de décompression (11), qui est monté au moyen d'un cadre (13) présentant une semelle d'appui (15) à partir d'un dispositif de fixation (14) dans une cloison intermédiaire (12) du véhicule séparant différents locaux, le panneau (11) pouvant être comprimé quand sont atteintes des conditions de pression de déclenchement prédéterminées entre sa face intérieure et sa face extérieure à partir de la cloison intermédiaire (12), dispositif caractérisé en ce que chaque dispositif de fixation est formé comme une fermeture à déclenchement (14, 14', 14''), qui est disposée avec une plaque de base (18) sur le cadre (13) pouvant se séparer de la cloison intermédiaire (12), le cadre (13) reposant au moyen d'une semelle (15) sur la cloison intermédiaire (12) et sur le panneau (11) et étant maintenu sur la face de la semelle (15) située en regard au moyen d'au moins un levier (23, 23', 23'', 23''') de la fermeture de déclenchement (14, 14', 14'') comme contre-palier et chaque levier de fermeture (23, 23', 23'', 23''') étant fixé de façon à pouvoir pivoter sur la plaque de base (18) et étant aussi bloqué dans sa position de fixation par une sécurité à cisaillement (24, 29).

2. Dispositif selon la revendication 1, caractérisé en ce que les leviers de fermeture (23, 23', 23'', 23''') peuvent pivoter sur le même axe de rotation (21).

3. Dispositif selon la revendication 1 ou 2, caractérisé en ce qu'il est prévu des leviers de fermeture de même type (23, 23'), qui sont montés sur l'axe de rotation (21) de façon alternée pour venir latéralement en prise sur la cloison intermédiaire (12) et sur le panneau (11).

4. Dispositif selon la revendication 3, caractérisé en ce que chaque levier de fermeture (23, 23') est bloqué dans sa position d'appui sur l'axe de rotation (21) au moyen d'un goujon à cisaillement (24).

5. Dispositif selon l'une des revendications parmi les revendications précédentes, caractérisé en ce que les leviers de fermeture (23, 23', 23'', 23''') présentent une surface de montage à pression (25) au-dessus de leur zone de palier pour l'axe de rotation.

6. Dispositif selon la revendication 1 ou 2, caractérisé en ce que la fermeture (14'') présente au moins un levier de fermeture (23'') qui est entouré dans la zone de palier pour l'axe de rotation d'un autre levier de fermeture (23''') ayant la forme d'une fourche.

7. Dispositif selon la revendication 6, caractérisé en ce que tous les leviers de fermeture (23'', 23''') sont bloqués par un goujon à cisaillement (29) dans leur position d'appui.

8. Dispositif selon la revendication 3 ou 4, caractérisé en ce que les leviers de fermeture (23') présentent des ergots de montage (26) pour le serrage au-dessus de leur zone de palier pour l'axe de rotation.

9. Dispositif selon l'une des revendications 2 à 8, caractérisé en ce que l'axe de rotation (21) est bloqué en position sur la pièce de base (18) par au moins un goujon à cisaillement (22).
